# EUROPEAN PATENT SPECIFICATION

(11) **EP 2 623 173 B1**
(45) Date of publication and mention of the grant of the patent: **18.05.2016**
(21) Application number: 13153697.1
(22) Date of filing: 01.02.2013
(51) Int. Cl.: A63J 25/00, A63G 31/16, G09B 9/08

(54) **Four degrees of freedom motion apparatus**
Vorrichtung mit vier Freiheitsgraden
Dispositif à quatre degrés de liberté

(30) Priority: 01.02.2012 KR 20120010490
(43) Date of publication of application: 07.08.2013
(73) Proprietor: CJ 4dplex Co., Ltd., Seoul 122-935 (KR)
(72) Inventor: Choi, Jong Su, 135-504 Seoul (KR)
(74) Representative: Hall, Matthew Benjamin

(56) References cited:
- EP-A2- 0 933 748
- KR-A- 20110 030 097
- US-A1- 2002 115 043

## Description

### [Technical Field]

The present invention relates to a four degrees of freedom motion apparatus, and more particularly, to a four degrees of freedom motion apparatus capable of implementing three degrees of freedom (pitch, roll, heave) motions by three actuators positioned at a lower plate and a center plate, and between the lower plate and the center plate, and a spline, and additionally implementing an one degree of freedom (sway) motion by a connecting means provided between the center plate and an upper plate.

### [Background Art]

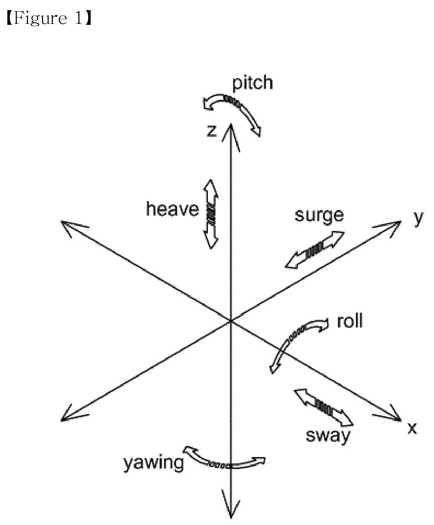

Equipment, such as an aircraft or a vessel implements 6 degrees of freedom motions. As illustrated in FIG. 1, the 6 degrees of freedom motions designates six types of virtual motions including yawing which rotates with respect to a z-axis, roll in which a y-axis horizontally rotates with respect to an x-axis, pitch in which the z-axis vertically rotates with respect to the y-axis, heave which linearly reciprocates on the z-axis, surge which linearly reciprocates on the y-axis, and sway which linearly reciprocates on the x-axis. A degree of freedom motion apparatus for implementing a degree of freedom motion by driving a hydraulic actuator was initially developed for military flight training. However, the degree of freedom motion apparatus has been gradually developed to a private training apparatus, such as a railroad and a vessel, as well as a military apparatus, according to development of scientific technique and a computer graphic technology. Further, the degree of freedom motion apparatus is also used for a driver of special constructional machinery, such as a bulldozer or a crane, through a system in which a peripheral image is change in real time so as to implement simulated driving in place of actual training, which is difficult due to various problems, such as safety and costs.

Recently, since the living standards have improved and spare time readily available, the degree of freedom motion apparatus is used for the purpose of entertainment, such as an amusement park, a game simulator, and a 3D movie theater, as well as a military purpose or a training purpose.

A degree of freedom motion apparatus used in a movie field in the related art generally implements only three degrees of freedom (roll, pitch, and heave) motion by an actuator. However, in a case where only three degrees of freedom motions are implemented, it is impossible to implement various types of motions appearing in a movie, thereby reducing interests of viewers, and in order to implement the motions of four degrees of freedom or more, it is necessary to add a plurality of apparatuses, so that there is a problem in that the apparatus becomes complex, and a production cost and a maintenance cost are increased.

Further, in the three degrees of freedom motion apparatus in the related art, an actuator and a plate are hinge-coupled, so that a bending moment or torsion load may be created at a portion in which the actuator is coupled, and thus there is a problem in that a defect may be generated in the coupling portion, thereby increasing a replacement cost of equipment, and in a severe case, the coupling portion may be damaged during an operation, thereby risking an injurious accident.

Further, the three degrees of freedom motion apparatus in the related art has a structure in which a spline is not included, so that the actuator supports all power generated while confining the remaining degrees of freedom, so that there is a problem in that structural safety of the motion apparatus is unstable against a large load, and precise adjustment of the degree of freedom motion is not smooth.

An exemplary three degree of freedom motion apparatus is disclosed in US 2002/115043 A1, in which three actuators in a triangular configuration are driven to cause roll, pitch and heave motions of a seat. A spline shaft is provided centrally of the actuators that prevents yaw motion.

### [Disclosure]

### [Technical Problem]

In order to solve the aforementioned problem, an object of the present invention is to provide a four degrees of freedom motion apparatus capable of additionally implementing an one degree of freedom motion by a point-contact or a surface contact between an upper plate and a center plate, implementing a precise degree of freedom motion by a spline, and controlling the degree of freedom motion.

### [Solution of Problem]

In order to achieve the above object, the present invention provides a four degrees of freedom motion apparatus, according to claim 1.

### [Advantageous Effects of Invention)

The four degrees of freedom motion apparatus according to the present invention includes the spline, thereby achieving an effect of increasing performance and stability of equipment by precisely controlling a degree of freedom motion and supporting a load applied to each actuator.

Further, the four degrees of freedom motion apparatus according to the present invention implements one degree of freedom (sway) motion by the upper plate and the ball bearing or the roller bearing, thereby achieving an effect of reducing a manufacturing cost and a manufacturing time thereof, and increasing satisfaction of a viewer with various degrees of freedom motions.

Further, the four degrees of freedom motion apparatus according to the present invention has an effect of increasing life of equipment and improving stability by minimizing bending stress or distortion applied to each connection portion by using the universal joint and the ball joint for the connection of the actuator and the spline.

### [Description of Drawings]

FIG. 1 is a conceptual diagram illustrating four degrees of freedom motions.
FIG. 2 is a front view of the four degrees of freedom motion apparatus according to an exemplary embodiment of the present invention.
FIG. 3 is a side view of the four degrees of freedom motion apparatus according to an exemplary embodiment of the present invention.
FIG. 4 is a perspective view of a state in which an upper plate and a center plate are removed in the four degrees of freedom motion apparatus illustrated in FIG. 3.
FIG. 5 is an enlarged perspective view of portion A of FIG. 4.
FIG. 6 is an enlarged perspective view of portion B of FIG. 4.
FIG. 7 is a detailed view of a connecting means.

**[Description of Main Reference Numerals of Drawings]**

| | |
|---|---|
| 1: Four degrees of freedom motion apparatus | 11: Lower plate |
| 12: Center plate | 13: Upper plate |
| 21, 22, 23: Acutator | 30: Spline |
| 31: Bolt-fastening | 32: Universal joint |
| 33: Elastic member | 40: Connecting means |
| 51, 52, 53: Driving motor | 61, 62, 63: Decelerator |
| 71, 72, 73: Crank arm | 81, 82, 83: Push rod |
| 91 92, 93: Fixing bracket | |
| 101, 102, 103: Universal joint | |
| 111, 112, 113: Ball joint | |
| 121, 122, 123: Ball joint | |

### [Best Mode]

Hereinafter, an exemplary embodiment of the present invention will be described in detail with reference to the accompanying drawings. First of all, in giving reference numerals to elements of each drawing, like reference numerals refer to like elements.

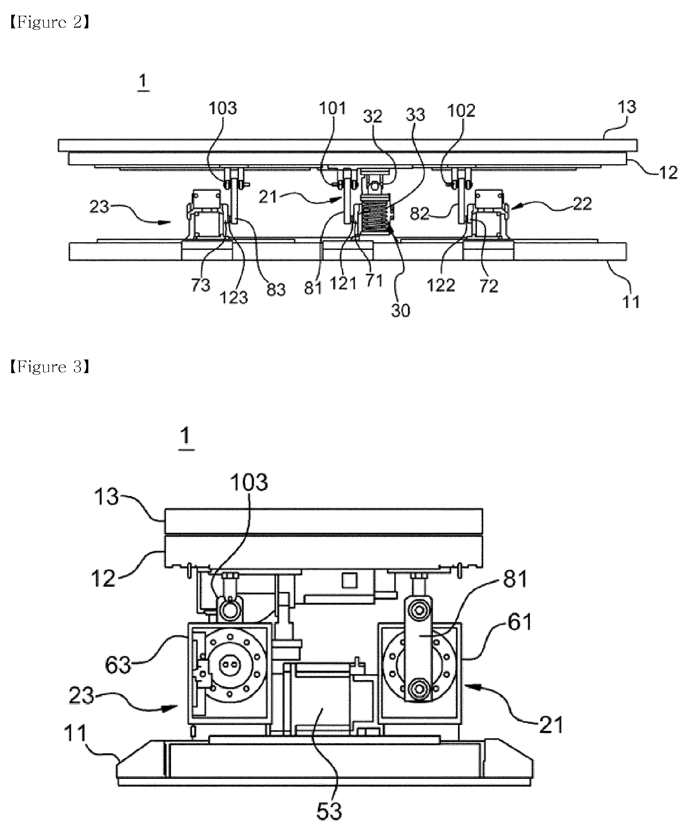

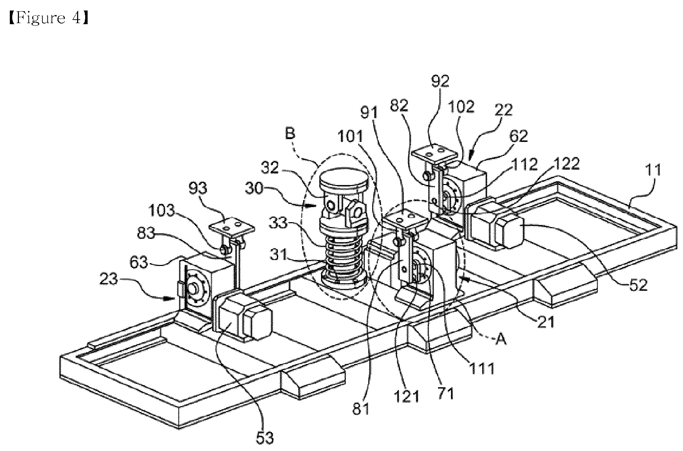

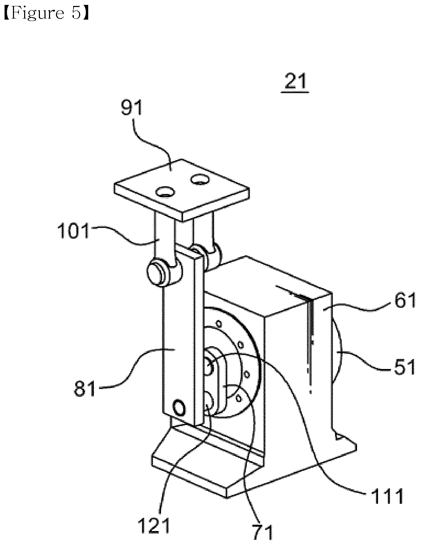

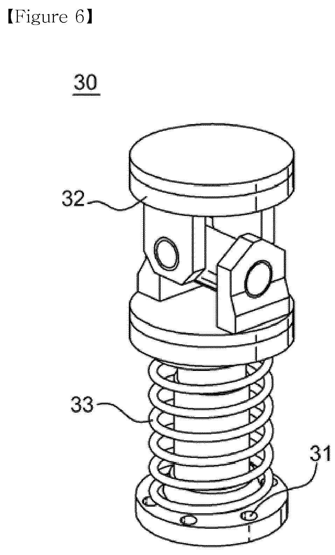

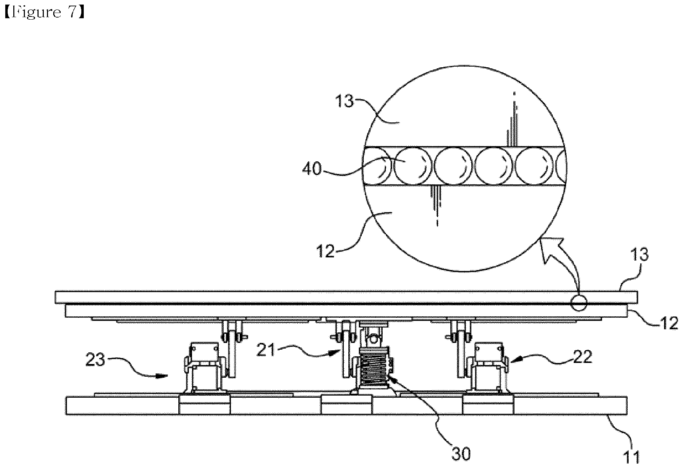

FIG. 2 is a front view of the four degrees of freedom motion apparatus 1 according to an exemplary embodiment of the present invention, and FIG. 3 is a side view of the four degrees of freedom motion apparatus 1 according to the exemplary embodiment of the present invention. FIG. 4 is a perspective view of a state in which an upper plate 13 and a center plate 12 are removed in the four degrees of freedom motion apparatus 1 illustrated in FIG. 3. FIG. 5 is an enlarged perspective view of portion A of FIG. 4, and FIG. 6 is an enlarged perspective view of portion B of FIG. 4. FIG. 7 is a detailed view of a connecting means 40. Hereinafter, the present invention will be described by way of example and with reference to the drawings.

The four degrees of freedom motion apparatus 1 according to an exemplary embodiment of the present invention includes a lower plate 11, the center plate 12, three actuators 21, 22, and 23, a spline 30, an upper plate 13, and the connecting means 40.

As illustrated in FIGS. 2 to 4, the lower plate 11 is positioned while being in contact with the ground. The center plate 12 is positioned while being spaced apart toward an upper side of the lower plate 11. The three actuators, that is, the first, second, and third actuators 21, 22, and 23, are positioned between the lower plate 11 and the center plate 12. Three degrees of freedom motions (roll, pitch, and heave) are implemented according to a driving form of the three actuators 21, 22, and 23. That is, in a case where a roll motion is implemented, any one between the second actuator 22 or the third actuator 23 moves up, and the actuator, which does not move up between the second actuator 22 or the third actuator 23, moves down. In a case where a pitch motion is implemented, the second and third actuators 22 and 23 both move up, and the first actuator 21 moves down, or the second and third actuators 22 and 23 both move down, and the first actuator 21 moves up. In a case where a heave motion is implemented, the first, second, and third actuators 21, 22, and 23 all move up, or the three actuators 21, 22, and 23 all move down.

According to the present invention, the first, second, and third actuators are positioned in a triangular shape. That is, as illustrated in FIG. 4, the first actuator 21 is positioned at a vertex of a triangle, and the second and third actuators 22 and 23 are positioned on the base line of the triangle. The first, second, and third actuators 21, 22, and 23 include first, second, and third driving motors 51, 52, and 53 fixedly installed in the lower plate 11, respectively. Although not essentially limited thereto, the first, second, and third driving motors 51, 52, and 53 are coupled to the lower plate 11 by bolt-fastening or welding. Each of first, second, and third decelerators 61, 62, and 63 is connected to one side of each of the first, second, and third driving motors 51, 52, and 53, respectively, to adjust rotation of the first, second, and third driving motors 51, 52, and 53. One ends of first, second, third crank arms 71, 72, and 73 are connected to the other sides of the first, second, and third driving motors 51, 52, and 53 through first, second, and third ball joints 111, 112, and 113, respectively. The other ends of the first, second, and third crank arms 71, 72, and 73 are connected to one ends of first, second, and third push rods 81, 82, and 83 through first, second, and third ball joints 121, 122, and 123, respectively. First, second, and third fixing brackets 91, 92, and 93 are fastened to a lower portion of the center plate 12. Although not essentially limited thereto, the first, second, and third fixing brackets 91, 92, and 93 are coupled to a lower portion of the center plate 12 by bolt-fastening or welding. The other ends of first, second, third push rods 81, 82, and 83 are connected to the first, second, and third fixing brackets 91, 92, and 93 through first, second, and third universal joints 101, 102, and 103, respectively. The crank arms 71, 72, and 73 are connected with the push roads 81, 82, and 83 through the ball joints 111, 112, 113, 121, 122, and 123, respectively, and the push roads 81, 82, and 83 are fastened to the center plate 12 through the universal joints 101, 102, and 103, so that bending stress or an axial load applied to a connection portion is minimized, thereby extending life of the actuator and improving safety.

The spline 30 is positioned between the three actuators 21, 22, and 23. A lower end of the spline 30 is bolt-fastened 31 to the lower plate 11. An upper end of the spline 30 is coupled to a lower portion of the center plate 12 through a universal joint 32.

As illustrated in FIG. 6, the spline 30 according to the present invention is positioned inside the triangle in which the first, second, and third actuators 21, 22, and 23 are disposed. Further, the spline 30 according to the present invention includes an elastic member 33 installed in an external circumferential surface of the spline 30 in order to support a load transmitted from the center plate 12 and the upper plate 13. The elastic member 33 may be formed of a spring. The spline 30 may precisely control the four degrees of freedom motion for the apparatus 1 according to contents of a movie, and improve stability of the apparatus by supporting a load applied to each of the actuators 21, 22, and 23.

The upper plate 13 is positioned while being spaced apart toward an upper side of the center plate 12. The center plate 12 and the upper plate 13 are connected by the connecting means 40. As illustrated in FIG. 7, the connecting means 40 according to the present invention is formed of one or more ball bearings or roller bearings. When the center plate 12 and the upper plate 13 are connected by the ball bearing, the center plate 12 and the upper plate 13 are adapted to additionally implement one degree of freedom (sway) of linearly reciprocating in an x-axis direction while being in point-contact with each other. When the center plate 12 and the upper plate 13 are connected by the roller bearing, the center plate 12 and the upper plate 13 are adapted to implement one degree of freedom (sway) of linearly reciprocating in the x-axis direction while being in surface-contact with each other.

Although not illustrated in the drawing, a chair on which a viewer may sit is laid on an upper side of the upper plate 13. Although not limited thereto, four or more chairs are formed in one assembly to be coupled to an upper surface of the upper plate 13.

The present invention is only limited by the scope of the accompanying claims.

## Claims

1. A four degrees of freedom motion apparatus, comprising:
a lower plate (11) contacting the ground;
a center plate (12) positioned, while being spaced apart from the lower plate (11), toward an upper side of the lower plate (11);
three actuators (21, 22, and 23) positioned in a triangular shape between the lower plate (11) and the center plate (12), and configured to implement three degrees of freedom motions according to driving forms thereof, the driving forms comprising:
where a roll motion about an x-axis is implemented, any one between a second actuator (22) and
a third actuator (23) moved up, and the actuator that does not move up between the second actuator (22) and the third actuator (23) moved down;
where a pitch motion about a y-axis is implemented, the second and third actuators (22 and 23) both moved up and a first actuator (21) moved down, or the second and third actuators (22 and 23) both moved down and the first actuator (21) moved up; and
where a heave motion along a z-axis is implemented, the first, second and third actuators (21, 22,
and 23) all move up or all moved down;
a spline (30) positioned between the three actuators (21, 22, and 23), and having a lower end bolt-fastened (31) to the lower plate (11), and an upper end coupled to a lower portion of the center plate (12) by a universal joint (32), wherein the spline (30) is positioned inside the triangle, and further comprises an elastic member (33), formed of a spring, installed in an external circumferential surface of the spline (30) in order to support a load transmitted from the center plate (12) and the upper plate (13);
an upper plate (13) positioned while being spaced apart from the center plate (12) toward an upper side of the center plate (12); and
a connecting means (40), formed of one or more ball bearings or roller bearings, configured to implement an additional one degree of freedom of reciprocating sway motion in an x-axis direction through a point-contact or surface contact of the center plate (12) and the upper plate (13),
wherein each of the actuators (21, 22, and 23) comprises:
a driving motor (51, 52, and 53) fixedly installed in the lower plate (11);
a decelerator (61, 62, and 63) connected to one side of the driving motor (51, 52, and 53) to decelerate rotation of the driving motor (51, 52, and 53);
a crank arm (71, 72, and 73) connected to other side of the driving motor (51, 52, and 53) through a ball joint (111, 112, and 113);
a push rod (81, 82, and 83) connected to one end of the crank arm (71, 72, and 73) through a ball joint (121, 122, and 123);
a fixing bracket (91, 92, and 93) fastened to a lower portion of the center plate (12); and
an universal joint (101, 102, and 103) through which one end of the push rod (81, 82, and 83) is connected to the fixing bracket (91, 92, and 93).

## Patentansprüche

1. Bewegungsvorrichtung mit vier Freiheitsgraden, umfassend:
eine untere Platte (11) den Boden berührend;
eine mittlere Platte (12) angeordnet, während beabstandet von der unteren Platte (11), gegenüber einer Oberseite der unteren Platte (11);
drei Aktuatoren (21, 22 und 23) angeordnet in einer dreieckigen Form zwischen der unteren Platte (11) und der mittleren Platte (12) und ausgebildet zum Umsetzen von Bewegungen mit drei Freiheitsgraden entsprechend deren Antriebsformen, wobei die Antriebsformen umfassen:
wenn eine Rollbewegung um eine x-Achse durchgeführt wird, hat sich jeder zwischen einem zweiten Aktuator (22) und einem dritten Aktuator (23) aufwärts bewegt, und der Aktuator, der sich zwischen dem zweiten Aktuator (22) und dem dritten Aktuator (23) nicht aufwärts bewegt hat, hat sich abwärts bewegt;
wenn eine Neigungsbewegung um eine y-Achse durchgeführt wird, hat sich sowohl der zweite wie auch der dritte Aktuator (22 und 23) aufwärts bewegt und ein erster Aktuator (21) hat sich abwärts bewegt, oder der zweite und der dritte Aktuator (22 und 23) haben sich beide abwärts bewegt und der erste Aktuator (21) hat sich aufwärts bewegt; und
wenn eine Auf- und Abbewegung entlang einer z-Achse durchgeführt wird, bewegen sich der erste, zweite und dritte Aktuator (21, 22 und 23) alle aufwärts oder alle abwärts;
eine Rippe (30) angeordnet zwischen den drei Aktuatoren (21, 22 und 23) und aufweisend ein unteres Ende, das an der unteren Platte (11) Bolzen-befestigt (31) ist, und ein oberes Ende verbunden mit einem unteren Abschnitt der mittleren Platte (12) mittels einem Universalgelenk (32), wobei die Rippe (30) innerhalb des Dreiecks angeordnet ist und weiterhin ein elastischen Element (33) umfasst, das als eine Feder ausgebildet ist und in einer externen Mantelfläche der Rippe (30) installiert ist, um eine Last, die von der mittleren Platte (12) und der oberen Platte (13) übertragen wird, zu tragen,
eine obere Platte (13) angeordnet, während beabstandet von der mittleren Platte (12), gegenüber einer Oberseite der mittleren Platte (12); und
ein Verbindungsmittel (40), gebildet von ein oder mehreren Kugellagern oder Wälzlagern, ausgebildet zum Umsetzen eines weiteren Freiheitsgrades (Schwingen) einer hin- und hergehenden Schwingbewegung in einer Richtung der x-Achse durch einen Punktkontakt oder einen Oberflächenkontakt der mittleren Platte (12) und der oberen Platte (13),
wobei jeder der Aktuatoren (21, 22 und 23) umfasst:
einen Antriebsmotor (51, 52 und 53) fest installiert in der unteren Platte (11);
einen Verzögerer (61, 62 und 63) verbunden mit einer Seite des Antriebsmotors (51, 52 und 53), um die Rotation des Antriebsmotors (51, 52 und 53) zu verzögern;
einen Kurbelarm (71, 72 und 73) verbunden mit der anderen Seite des Antriebsmotors (51, 52 und 53) mittels eines Kugelgelenkes (111, 112 und 113);
eine Schubstange (81, 82 und 83) verbunden mit einem Ende des Kurbelarms (71, 72 und 73) mittels eines Kugelgelenkes (121, 122 und 123);
eine Befestigungsklammer (91, 92 und 93) befestigt an einem unteren Abschnitt der mittleren Platte (12); und
ein Universalgelenk (101, 102 und 103) durch welches ein Ende der Schubstange (81, 82 und 83) mit der Befestigungsklammer (91, 92 und 93) befestigt ist.

## Revendications

1. Dispositif à quatre degrés de liberté, comprenant :
une plaque inférieure (11) en contact avec le sol ;
une plaque centrale (12) positionnée, tout en étant espacée de la plaque inférieure (11), en direction d'un côté supérieur de la plaque inférieure (11) ;
trois actionneurs (21, 22 et 23) positionnés selon une forme triangulaire entre la plaque inférieure (11) et la plaque centrale (12), et conçus pour mettre en oeuvre trois degrés de liberté en fonction des formes d'entraînement de ces dernières, les formes d'entraînement comprenant :
lorsqu'un mouvement de roulis autour d'un axe x est mis en oeuvre, l'un quelconque entre un deuxième actionneur (22) et un troisième actionneur (23) déplacé vers le haut, et l'actionneur qui ne se déplace pas vers le haut entre le deuxième actionneur (22) et le troisième actionneur (23) déplacé vers le bas ;
lorsqu'un mouvement de tangage autour d'un axe y est mis en oeuvre, les deuxième et troisième actionneurs (22 et 23) tous les deux déplacés vers le haut et un premier actionneur (21) déplacé vers le bas, ou les deuxième et troisième actionneurs (22 et 23) tous les deux déplacés vers le bas et le premier actionneur (21) déplacé vers le haut ; et
lorsqu'un mouvement de lacet le long d'un axe z est mis en oeuvre, les premier, deuxième et troisième actionneurs (21, 22 et 23) se déplaçant tous vers le haut ou tous déplacés vers le bas ;
une cannelure (30) positionnée entre les trois actionneurs (21, 22 et 23), et présentant un boulon d'extrémité inférieure (31) fixé à la plaque inférieure (11), et une extrémité supérieure accouplée à une partie inférieure de la plaque centrale (12) par un joint de cardan (32), dans lequel la cannelure (30) est positionnée à l'intérieur du triangle, et comprend en outre un élément élastique (33), fait d'un ressort, installé dans une surface circonférentielle externe de la cannelure (30) afin de soutenir une charge transmise à partir de la plaque centrale (12) et de la plaque supérieure (13) ;
une plaque supérieure (13) positionnée tout en étant espacée de la plaque centrale (12) en direction d'un côté supérieur de la plaque centrale (12) ; et
un moyen de raccordement (40), fait d'un ou de plusieurs roulements à billes ou roulements à rouleaux, conçus pour mettre en oeuvre un degré de liberté additionnel (mouvement de balancement) d'un mouvement de balancement en va-et-vient dans une direction d'axe x par l'intermédiaire d'un contact ponctuel ou d'un contact superficiel de la plaque centrale (12) et de la plaque supérieure (13),
dans lequel chacun des actionneurs (21, 22 et 23) comprend :
un moteur d'entraînement (51, 52 et 53) installé fixement dans la plaque inférieure (11) ;
un ralentisseur (61, 62 et 63) raccordé à un côté du moteur d'entraînement (51, 52 et 53) pour ralentir la rotation du moteur d'entraînement (51, 52 et 53) ;
un bras de manivelle (71, 72 et 73) raccordé à l'autre côté du moteur d'entraînement (51, 52 et 53) par l'intermédiaire d'une articulation sphérique (111, 112 et 113) ;
une tige de poussée (81, 82 et 83) raccordée à une extrémité du bras de manivelle (71, 72 et 73) par l'intermédiaire d'une articulation sphérique (121, 122 et 123) ;
une équerre de fixation (91, 92 et 93) fixée à une partie inférieure de la plaque centrale (12) ; et
un joint de cardan (101, 102 et 103) par l'intermédiaire duquel une extrémité de la tige de poussée (81, 82 et 83) est raccordée à l'équerre de fixation (91, 92 et 93).
